# EUROPEAN PATENT SPECIFICATION

(11) **EP 4 457 265 B1**
(45) Date of publication and mention of the grant of the patent: **02.12.2026**
(21) Application number: 22843212.6
(22) Date of filing: 20.12.2022
(51) Int. Cl.: C08G 63/88

(54) **PROCESS FOR PRODUCING VARIOUS MOLECULAR WEIGHT POLYESTERS**
VERFAHREN ZUR HERSTELLUNG VON POLYESTERN MIT VERSCHIEDENEN MOLEKULARGEWICHTEN
PROCÉDÉ DE PRODUCTION DE POLYESTERS DE DIVERS POIDS MOLÉCULAIRES

(30) Priority: 27.12.2021 EP 21217797
(43) Date of publication of application: 06.11.2024
(73) Proprietor: SABIC Global Technologies B.V., 4612 PX Bergen op Zoom (NL)
(72) Inventor: ALIVE, Keshavaraja, 6160 GA Geleen (NL); NELSON, Mark Erik, 6160 GA Geleen (NL)
(74) Representative: Sabic Intellectual Property Group
(86) International application number: PCT/EP2022/087068
(87) International publication number: WO 2023/126256

(56) References cited:
- WO-A1-03/051970
- JP-A- 2000 302 849
- US-A- 5 298 530
- US-A1- 2004 220 334
- US-B1- 6 297 330

## Description

### TECHNICAL FIELD

This application relates to a system and process for making polyester and especially relates to a system and process for making a variety of molecular weights of C₂₋₁₂ alkyl phthalates.

### BACKGROUND

In the industry, when changing the molecular weight of a poly(butylene terephthalate), a continuous polymerization plant requires the adjustment of many polymerization parameters. For example, a high molecular weight poly(butylene terephthalate) is prepared under conditions of higher temperature and higher residence time as compared to a lower molecular weight poly(butylene terephthalate). Accordingly, when switching from one molecular weight poly(butylene terephthalate) to another molecular weight poly(butylene terephthalate), the following parameters are changed: the molar ratio of the monomers, the reaction temperatures in the oligomerization reactors, the reaction temperatures in the polymerization reactors, the amount of catalyst, and the overall throughput of the plant (residence time). This changeover can take several hours, where, during the several hour changeover from one molecular weight poly(butylene terephthalate) to another molecular weight poly(butylene terephthalate), a large amount of waste poly(butylene terephthalate) is produced. This problem is increasingly an issue as the size of poly(butylene terephthalate) plants increases. For example, in a large poly(butylene terephthalate) plant that produces greater than 60,000 tons per year, a large amount of waste is undesirably produced during a changeover. As a result, the development of larger poly(butylene terephthalate) plants is hampered by inefficiencies of the changeover process.

Other processes to produce polyester resin are also disclosed in the art. US6297330B1 discloses a process for polymerizing cyclic oligomers in the presence of one or more linear polymers. JP2000302849A discloses a method for producing polyester which involves recycling waste polyester resin. WO2003051970A1 discloses a process for making polyester containing up to 50 percent by weight transparent recycled waste polyester by a novel equilibrium depolymerization process. US5298530A relates to the recovery of components from scrap polyester such as polyethylene terephthalate. More particularly, it relates to a process of shortening the polyester chain lengths in a polyester scrap melt by contacting the scrap with a reactor melt prior to the introduction of scrap melt to the reactor. US20040220334A1 discloses the blends of macrocyclic polyester oligomer (MPO) with high-molecular-weight polymer and polymerization catalyst as friable, one-component, ready-to-polymerize materials with long shelf life.

Accordingly, improved methods for preparing poly(butylene terephthalate) are desired, where changeover between different molecular weight poly(butylene terephthalate) is simplified and/or the production of poly(butylene terephthalate) waste is reduced.

### BRIEF SUMMARY

Disclosed herein is a process for reducing the molecular weight of a polyester.

In an aspect, the process comprises adding a polyester oligomer to the polyester in a molten state and having an initial melt viscosity to form a modified polyester having a reduced melt viscosity that is less than the initial melt viscosity.

In another aspect, a method for reducing the molecular weight of a polyester, comprises mixing a composition comprising a polyester oligomer and a polyester in a molten state to form a modified polyester; wherein the mixing occurs at a temperature of 230 to 330 °C; wherein the polyester oligomer is present in an amount of 0.1 to 50 weight percent based on the total weight of the composition; wherein the polyester comprises a C₂₋₁₂ alkyl phthalate polyester having a weight average molecular weight, Mwᵢ, of 15,000 to 100,000 g/mol determined using gel permeation chromatography based on polystyrene standards; and wherein the modified polyester has a weight average molecular weight, Mw_{f}, of at least 5% less than the weight average molecular weight of the polyester, wherein the polyester oligomer has a weight average molecular weight of 1,000 to 10,000 g/mol based on polystyrene standards;and wherein at least one of an amount of the hydroxyl end groups of the modified polyester is 50 to 250 meq/kg as determined in accordance with ASTM D4274-21;a carboxylic acid end group concentration of the modified polyester is 20 to 100 meq/kg as determined in accordance with ASTM D7409-15; or a ratio of the hydroxyl end groups to the carboxylic end groups of the modified polyester is 1.2 to 2.5.

The above described and other features are exemplified by the following figures, detailed description, and claims.

### BRIEF DESCRIPTION OF THE DRAWINGS

The following Figures are exemplary embodiments, which are provided to illustrate the present disclosure. The figures are illustrative of the examples, which are not intended to limit devices made in accordance with the disclosure to the materials, conditions, or process parameters set forth herein.
FIG. 1 is an exemplary illustration of a process of adding a polyester oligomer to a polyester; and
FIG. 2 is an exemplary illustration of a process of adding a polyester oligomer to a polyester during polymerization.

### DETAILED DESCRIPTION

When adjusting the molecular weight of a polyester in a continuous polymerization, the process conditions such as one or more of a monomer flow rate, a catalyst flow rate, a polymerization temperature, a polymerization pressure, and plant throughput are adjusted. The transition time in changing over production to the desired molecular weight polyester can take as many as several hours, resulting in the production of a large amount of waste polyester and/or polyester that does not meet the desired specifications, also referred to as off-spec polyester.

A method of reducing the molecular weight of a polyester was developed that can comprise adding a polyester oligomer to the polyester in a molten state and having an initial melt viscosity to form a modified polyester having a reduced melt viscosity that is less than the initial melt viscosity. The process can comprise melting a plurality of polyester pellets to form the polyester in the molten state and then adding the polyester oligomer. The process can comprise reacting an alkane diol and a dicarboxylic acid in a continuous polymerization reaction to form the polyester; and adding the polyester oligomer to the polyester during the continuous polymerization reaction. The adding the polyester oligomer can comprise transferring the polyester oligomer through a melt line to the polyester and mixing the polyester oligomer and the polyester in a mixer, for example, an in-line mixer, an extruder, or a continuously stirred tank.

The method of adding a polyester oligomer can be utilized in a polyester production line. Such a method for producing a different molecular weight polyester in a production line can occur without changing the processing conditions. In other words, the processing conditions (such as pressures, temperatures, monomer flow rates, and catalyst flow rate) can remain the same (i.e., they only fluctuate within normal operating parameters for making a single molecular weight polyester, for example, they can each independently vary within 5%, or, 1% of a specific value or of a set of values), yet various desired molecular weight polyester can be produced. Specifically, the process can involve polymerizing a polyester with an initial molecular weight in the polymerization system. In other words, the processing conditions are not adjusted to attain a different molecular weight polyester, but remain set to produce a high molecular weight polyester. After the final polymerization, if a different molecular weight polyester is desired, the melt viscosity is reduced to the desired melt viscosity (e.g., a final melt viscosity) using a polyester oligomer that acts to reduce the melt viscosity of the polyester.

For example, a polymerization can operate at a set of conditions (for example, of temperature, pressure, residence time, catalyst concentration, monomer flow rate, or a combination comprising one or more of the foregoing, e.g., of temperature, pressure, residence time, and catalyst concentration) that remain within 5%, or within 1% of their set values prior to, during, and after the molecular weight adjustment. For example, the polymerization process can be operated at conditions such that the polymerized polyester has an initial melt viscosity prior to the addition of the polyester oligomer, i.e., but for the addition of the polyester oligomer. The polyester oligomer can be added to the polyester to result in a modified polyester with a reduced melt viscosity. In this manner, the set of processing conditions does not change, but the melt viscosity of the polyester can be easily adjusted merely by the introduction of a polyester oligomer.

The present method can be especially beneficial in a large production facility with a production rate of greater than or equal to 65,000 tons per year (t/y), or greater than or equal to 100,000 t/y. For example, in a large production facility with a production rate of 65,000 t/y, a standard changeover time to change product could result in 4,000 tons of waste and/or off-spec polyester per transition. Reducing the changeover time to 0.5 hour can reduce the amount of waste and/or off-spec polyester generated by a factor of ten to only 5 tons of waste per transition and further reducing the changeover time to 0.2 hour can reduce the amount of waste generated to only 1.7 tons of waste polyester per transition. Hence, significant savings and improvements can be realized with the present method, which is especially evident in large scale polyester production plants, e.g., greater than 30,000 t/y, or greater than or equal to 40,000 t/y, or greater than or equal to 50,000 t/y, or greater than or equal to 60,000 t/y, or 30,000 to 80,000 t/y.

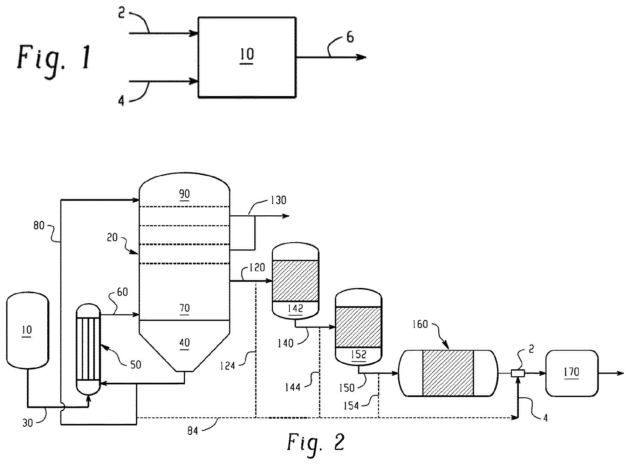

FIG. 1 is an illustration of an aspect of the present method. FIG. 1 illustrates that a polyester can be added to a mixer 2 via a supply line 6. The polyester can be added in a solid form or in a liquid (for example, molten) form. The polyester oligomer can be added to the mixer 2 via melt line 4. A temperature of the melt line 4 and/or the mixer 2 can be 225 to 250 degrees Celsius (°C), or 230 to 270°C, or 230 to 260 °C. The modified polyester can exit the mixer 2 via product line 8. The mixer 2 can be an in-line mixer, for example, located upstream of an extruder. The in-line mixer can include at least one static mixer. The static mixer can have a length of at least 50 centimeters, or at least 50 millimeters. The mixer 2 can be an extruder. The mixer 2 can be a continuously stirred tank.

The method can comprise mixing a composition comprising a polyester oligomer and a polyester in a molten state to form a modified polyester. The method can comprise extruding the composition. The extruding can be performed at atmospheric pressure.

Prior to the mixing of the polyester oligomer, the polyester can have an initial melt viscosity of 740 to 9,500 Poise. Melt Viscosity is determined by the standard procedure, ASTM 1238-20. After the adding of the polyester oligomer, the polyester can have a reduced melt viscosity that less than that of the initial melt viscosity. A ratio of the initial melt viscosity to the reduced melt viscosity can be 1:0.9 to 1:0.1; or 1:0.8 to 1:0.5.

The C₂₋₁₂ alkyl phthalate polyester can have a weight average molecular weight, Mwᵢ, of 15,000 to 100,000 g/mol, or 15,000 to 80,000 g/mol based on polystyrene standards. The polyester oligomer has a weight average molecular weight of 1,000 to 10,000 g/mol based on polystyrene standards. The modified polyester can have a weight average molecular weight, Mw_{f}, of at least 5%, or at least 10%, or 10 to 25% less than the weight average molecular weight of the polyester (for example, Mw_{f} ≤ Mwᵢ - 5% Mwᵢ).

An amount of the hydroxyl end groups of the modified polyester is 50 to 250 milliequivalents of end group per kilogram of the modified polyester (meq/kg). An amount of the carboxylic acid end groups (CEG) of the modified polyester is 20 to 100 meq/kg, or 20 to 80 meq/kg, or 40 to 60 meq/kg. The modified polyester can have a carboxylic acid end group reduced by 5 to 10 meq/kg relative to the polyester. A ratio of the hydroxyl end groups to the carboxylic end groups of the modified polyester is 1.2 to 2.5.

The method of adding the polyester oligomer can be used to reduce the melt viscosity of commercial grades of poly(butylene terephthalate) (PBT). Table 1 shows a list of 5 different grades of PBT and their respective melt viscosities and carboxylic acid end group (CEG) concentrations.

| Table 1 | | |
|---|---|---|
| PBT Grade | Melt viscosity (Poise) | CEG (meq/kg) |
| 176 | 250 to 450 | 40 |
| 195 | 740 to 900 | 40 |
| 306 | 1,450 to 1,850 | 55 |
| 309 | 3,500 to 4,500 | 55 |
| 315 | 7,500 to 9,500 | 55 |

Considering the present method, an amount of a higher grade PBT, for example, of the 315 grade can be mixed with the polyester oligomer to form any one or more of the lower grades, for example, any of the 309 grade, the 306 grade, the 195 grade, or the 176 grade. In another example, the initial PBT could be the 195 grade PBT that is mixed with the polyester oligomer to form the 176 grade PBT. In the context of a continuous polymerization, the polymerization plant can be configured to polymerize one of the higher melt viscosity PBT grades and an amount of the polyester oligomer can be added after the higher grade is formed. For example, the polymerization plant can be configured to produce the 315 grade and a polyester oligomer can be added to the 315 grade PBT to form any of the 309 grade, the 306 grade, the 195 grade, or the 176 grade without changing the polymerization conditions.

The reduction in the melt viscosity after adding the polyester oligomer can be dependent on the relative amount of the polyester oligomer, the molecular weight of the polyester oligomer, the temperature, and the residence time. The composition can comprise 0.1 to 50 weight percent (wt%), or 0.2 to 40 wt%, or 0.5 to 10 wt% of the polyester oligomer based on the total weight of the composition. A weight ratio of the polyester oligomer to the polyester can be 0.001:1 to 0.5:1, or 0.001 to 0.1:1. The residence time after adding the polyester oligomer can be 0.5 to 5 minutes.

After adding the polyester oligomer, the modified polyester can be pelletized. Examples of pelletizers include water slide pelletizers, strand pelletizers, or underwater pelletizers. The pellets comprise cylinders with an average length of 2.0 to 6.0 millimeters (mm) and an average diameter of 0.5 to 4.0 mm. The pellets can have at least one angular face and wherein the surfaces defining the angular face meet at an angle of 60 to 120 degrees.

The polyester can comprise at least one C₂₋₁₂ alkyl phthalate polyester. The polyester can comprise at least one of poly(ethylene terephthalate), poly(butylene terephthalate), or a copolymer comprising at least one of the foregoing. The polyester can comprise, can consist essentially of, or can consist of poly(butylene terephthalate). The polyester can comprise a copolymer of the polyester and another polymer, for example, a polycarbonate.

The composition can comprise at least 10 ppm by weight, or at least 50 ppm by weight, or 10 to 200 ppm by weight of at least one of titanium, tin, antinomy, or a combination comprising at least two of the foregoing based on the total weight of the composition. The composition can comprise less than or equal to 1,000 ppm by weight of a phosphorous containing compound based on the total weight of the polyester composition. The composition can comprise less than or equal to 1 ppm by weight of lead, mercury, cadmium, thallium, chromium, arsenic, or a combination comprising at least two of the foregoing based on the total weight of the polyester composition.

The method can further comprise preparing the polyester. The method of preparing the polyester is not limited. For example, the polyester can be prepared in a two-stage process including an oligomerization stage and a polymerization stage. The oligomerization stage can comprise transesterifying a dicarboxylic acid with an alkane diol in the presence of a catalyst to form an intermediate weight oligomer. The polymerization stage can produce a higher molecular weight polyester by polycondensation of the intermediate weight oligomer under reduced pressures and increased temperatures. The polyester oligomer can be added to the polyester after the polymerization is completed. For example, the polyester oligomer can be added after a final polymerization (e.g., after a final polymerization unit). As used herein, "after final polymerization" refers to a time after which the Mw does not increase by greater than 10 wt%, or by greater than or equal to 5 wt% after final polymerization.

In general, the first stage of preparing a polyester oligomer comprises reacting an alkane diol and a dicarboxylic acid in excess of the alkane diol and in the presence of a catalyst. The monomer mixer can be heated to a temperature of 160 to 180 °C. When the temperature of the reaction mixture is in the range of approximately 160 to 180 °C, the temperature can be raised to 220 to 265 °C to initiate the ester interchange. Depending on the starting monomers, the overheads can include methanol, tetrahydrofuran (THF), water (H₂O), or unreacted alkane diol, which can be sent to a distillation column for recovery of water and tetrahydrofuran. Excess alkane diol can be recovered as column bottom and recycled back to the process.

The ester interchange can be complete when the clearing point is reached based on visual inspection. As used herein the "clearing point" occurs when the reaction medium becomes homogeneous melt. The clearing point can vary depending on the reaction conditions such as the dicarboxylic acid to alkane diol ratio, reaction temperature, operating pressure, residence time, and reflux ratio. After the clearing point is reached, the pressure can be reduced to about 50 to 760 millimeters of mercury (mm Hg) and the temperature can be maintained at 230 to 260 °C for sufficient time to achieve desired melt viscosity and CEG values in the resulting PBT oligomer. At the completion of the reaction, the pressure can be returned to atmospheric pressure and the oligomer can be analyzed. The resulting oligomer can be cooled to a solid, then flaked, powdered, or pelletized, and used to make resin.

In the oligomerization stage, the alkane diol can be present in excess. A molar ratio of the alkane diol to the dicarboxylic acid can be 6:1 to 2:1, or 4.25:1 to 2.95:1. The molar ratio of alkane diol to dicarboxylic acid can vary depending on the desired melt viscosity and CEG of the resulting polyester oligomer. For example, to achieve an intrinsic viscosity (IV) of approximately 0.13 to 0.17 deciliters per gram (dl/g) and a CEG of 90 to 180 meq/kg, a molar ratio of the alkane diol to the dicarboxylic acid of 3:1 can be used. Alternatively, to achieve an IV of 0.25 to 0.43 dl/g and a CEG of lower than 20 meq/kg, the alkane diol to the dicarboxylic acid molar ratio of 4:1 can be used.

It is noted that variation in CEG concentration after the first stage of the process can have downstream consequences for the rest of the process, particularly at the polycondensation stage. This variation can translate into variations in CEG concentration in the resulting polyester. Typically, IV increases during the polycondensation step with a simultaneous decrease in CEG concentration. However, depending on the residence time of the polycondensation step, the CEG concentration can potentially increase due to side reactions such as through a back-biting reaction of the alkane diol end groups. The uncertainty associated with variability in the reaction conditions and times for the polymerization (particularly when the process is continuous) makes controlling CEG concentration in the polyester a challenge.

The oligomers can then be reacted in a pre-polycondensation reaction where a low molecular weight polyester is formed. The low molecular weight polyester can be further reacted in a polycondensation reaction (polymerization reaction) to produce the polyester having the initial melt viscosity. The polycondensation reaction can occur in a finishing reactor. The polymerization can occur at a temperature of 230 to 260 °C. One or both of an additional alkane diol or an additional catalyst can be added to the polymerization. The polymerization can occur under mixing. The polymerization can occur at a vacuum pressure of less than or equal to 1 millimeter of mercury. The polymerization can occur for 15 to 120 minutes. Excess alkane diol can be recovered as column bottom and recycled back to the process. After the polymerization, the pressure can be changed to atmospheric, e.g., 1 bar.

After the polymerization, the polyester oligomer can be added to the polyester to form the modified polyester having a reduced melt viscosity. The polyester oligomer can be premixed with the polyester upstream of an extruder or the polyester oligomer can be added directly to the extruder, for example, in a downstream inlet from where the polyester is added.

The polycondensation of the oligomer to make the polyester with a specified melt viscosity and CEG can be carried out continuously using industrial-scale equipment comprising a melt tank for melting oligomers, one or more reactors for post-condensation processing, and one or more finishing reactors to increase molecular weight. The reactor can further comprise a slurry paste vessel and reactor units to form the oligomer. In an example, the polymerization of polyester can employ 1 to 6, or 4 to 6 continuous reactors followed by 1 to 2 finishers. A portion of the reaction product of any one or more of the continuous reactors during the oligomerization stage can be used as the polyester oligomer to reduce the viscosity of the polyester. Examples of finishers include disc cage reactors or disc ring reactors (DRR). The finisher can include an inline viscometer that can be coupled to a feedback loop that can control at least one of the temperature, absolute pressure, and the level of the components in the finisher.

The finisher can include a disc ring reactor. The disc ring reactor can have a two shaft reactor with the first shaft having more disc rings than the second shaft, where each of the shafts operate at two different rotation speeds. For example, the first shaft can have 5 or 6 disc rings and can rotate at a rotation speed of 4 to 10 revolutions per minute (rpm) and the second shaft can have 3 or 4 disc rings and can rotate at a rotation speed of 2.2 to 5 rpm. A distance between the rings of the first shaft can be 60 and 90 mm. A distance between the rings of the second shaft can be 100 to 130 mm.

An example of a polyester polymerization is illustrated in FIG. 2. FIG. 2 illustrates that the dicarboxylic acid and the alkane diol can be mixed in a slurry paste vessel 10 to form a monomer mixture. The monomer mixture can be transferred via supply line 30 to tower reactor 20. Tower reactor 20 can include hydrocyclone 40, heat exchanger 50, pressure pipe 60 connecting the upper portion of the heat exchanger 50 to the esterification section 70, and pipe stretch 80 connecting the esterification section 70 to the cascade post-esterification section 90 of the tower reactor 20. A polyester oligomer pipe 84 can connect the hydrocyclone 40 with melt line 4. Pipe 120 can connect the lower end of the cascade post-esterification section 90 to first continuously stirred tank reactor 142. A polyester oligomer pipe 124 can connect the cascade post-esterification section 90 with melt line 4. Byproducts and excess alkane diol can be vented from the tower reactor 20 via vent 130. The first continuously stirred tank reactor 142 can be connected to a second continuously stirred tank reactor 152. A polyester oligomer pipe 144 can connect the first continuously stirred tank reactor 142 with melt line 4. The second continuously stirred tank reactor 152 can be connected to a finishing reactor 160. A polyester oligomer pipe 154 can connect the second continuously stirred tank reactor 152 with melt line 4. A polyester oligomer can be added to the polyester via melt line 4. The melt line 4 can be connected with one or more upstream units to provide the polyester oligomer. In other words, the oligomer formed at earlier stages in the polymerization can be used as the viscosity reducing agent of the polyester after polymerization. The melt line 4 can be directed to a mixer 2. Mixer 2 can be, for example, an inline mixer, an extruder, or a continuously stirred tank. The mixer 2 can be connected to a pelletizer 170. If the mixer 2 is an extruder, then the pelletizer 170 can be a single unit with the extruder.

The polymerization process can comprise combining a dicarboxylic acid and an alkane diol in a slurry paste vessel 10 to form a monomer mixture. The temperature, pressure, and a residence time in the slurry paste vessel 10 can be sufficient to allow the slurry/paste to form. The temperature in the slurry paste vessel 10 can be 20 to 110°C, or 50 to 100 °C, or 70 to 90 °C. The pressure in the slurry paste vessel 10 can be 0.1 to 1.1 bar, or 0.8 to 1.05 bar, or 0.9 to 1.02 bar. The residence time in the slurry paste vessel 10 can be 1 to 4 hours, or 2.5 to 3.5 hours.

A catalyst and the monomer mixture can be supplied from the slurry paste vessel 10 to the esterification section 70 of the tower reactor 20. Tower reactors are known in the art and can be configured such that the lower third of the tower reactor is in the form of a hydrocyclone 40 with attached heat exchanger 50, and the hydrocyclone 40 can have a supply line 30 from the slurry paste vessel 10 and that is connected via a pressure pipe 80 to the cascade post-esterification section 90 of the tower reactor 20. The cascade post-esterification section 90 of the tower reactor 20 can be configured in the form of a downflow cascade and the cascade is in communication via a pipe with the central part, esterification section 70, of the tower reactor 20.

A temperature in the esterification section 70 can be 160 to 270 °C, or 160 to 180 °C. A pressure in the esterification section 70 can be 0.5 to 1 bar. The reaction product of the esterification section 70 can be transferred continuously to the cascade post-esterification section 90 of the tower reactor 20 via pipe stretch 80. An additional amount of the alkane diol can be added to the cascade post-esterification section 90. The cascade post-esterification section 90 can comprise 1 to 8, or 3 to 5 cascades in series. A pressure in each subsequent cascade can be reduced by an amount such that the pressure in the final cascade is less than or equal to 0.25 bars, or less than or equal to 0.2 bars. An additional amount of catalyst can be added to the final cascade.

The reaction product, comprising the oligomer, from the cascade post-esterification section 90 of the tower reactor 20 can be continuously supplied to the first continuously stirred tank reactor 142. It is noted that for the purposes of the present disclosure, the process can comprise obtaining an oligomer that was not obtained in the present process. For example, a pelletized oligomer can be melted in a melt tank and supplied to the first continuously stirred tank reactor 142 via pipe 120. Pipe 120 can be heated, for example, at a temperature of 230 to 270 °C.

The first continuously stirred tank reactor 142 can be at a temperature of 220 to 270 °C, or 225 to 250 °C. The first continuously stirred tank reactor 142 can be at a pressure of 5 to 40 millibars. A residence time in the first continuously stirred tank reactor 142 can be 10 minutes to 7 hours, or 3 to 6 hours, or 40 to 150 minutes, 10 to 60 minutes.

The reaction product, comprising a low molecular weight polyester from the first continuously stirred tank reactor 142 can be supplied to a second continuously stirred tank reactor 152 and then to a finishing reactor 160 or it can be supplied directly to the finishing reactor 160. The second continuously stirred tank reactor 152 can be at a temperature of 230 to 260 °C. The second continuously stirred tank reactor 152 can be at a pressure of 0.1 to 35 millibars. A residence time in the second continuously stirred tank reactor 152 can be 10 to 60 minutes.

One or both of the continuously stirred tank reactors can include an inline viscometer coupled with a feedback loop that can control at least one of the temperature, the pressure, or the flow rates in and out of the reactor of the various streams and/or catalyst.

The finishing reactor 160 can be at a temperature of 230 to 270 °C, or 230 to 255 °C. The finishing reactor 160 can be at a pressure of 0.1 to 16 millibar, or 0.8 to 5 millibars. A residence time in the finishing reactor 160 can be 30 minutes to 10 hours, or 4 to 9 hours. The polyester in a molten state can be formed in the finishing reactor 160. The polyester can have the initial melt viscosity.

At least a portion of the polyester can be mixed with the polyester oligomer. For example, 10 to 100 volume percent of the polyester based on the total volume of the polyester can be mixed with the polyester oligomer and 0 to 90 volume percent of the polyester based on the total volume of the polyester can be directed to a pelletizer (not illustrated). The polyester oligomer can be added to the polyester via melt line 4. A temperature of at least one of the melt line 4 or the mixer 2 can be 230 to 260 °C. A pressure of the mixer 2 can be 1.01 to 1.1 bar. The melt line 4 can be directed to a mixer 2 to form the modified polyester. The modified polyester can be directed to a pelletizer 170.

A feedback loop can be employed to monitor the change in the melt viscosity, where, for example, the viscosity of the polyester and/or the modified polyester can be monitored and the flow rate of the polyester oligomer can be adjusted based on the measured viscosity. The viscosity can be measured, for example, using an in-line viscometer or can be determined based on flow and pressure measurements.

The dicarboxylic acid can comprise at least one of an aromatic dicarboxylic acids (for example, having 8 to 14 carbon atoms), an aliphatic dicarboxylic acid (for example, having 4 to 12 carbon atoms), or a cycloaliphatic dicarboxylic acid (for example, having 8 to 12 carbon atoms). The dicarboxylic acid can comprise at least one of terephthalic acid, isophthalic acid, naphthalene dicarboxylic acid, cyclohexane dicarboxylic acid, stilbene dicarboxylic acid, succinic acid, glutaric acid, adipic acid, or azelacic acid. The dicarboxylic acid can comprise a purified dicarboxylic acid, for example, a purified terephthalic acid. The purified dicarboxylic acid typically comprises less than or equal to 10 weight percent of impurities as measured using conventional techniques based on the total weight of the purified dicarboxylic acid.

The alkane diol can comprise at least one of a C₂₋₈ alkane diol or a C₂₋₄ alkane diol. The alkane diol can comprise at least one of diethylene glycol, 1,2-propanediol, neopentyl glycol, 1,4-butanediol, 1,5-pentanediol, and 1,6-hexanediol. The alkane diol can comprise 1,4-butane diol. The alkane diol can be purified. For example, the alkane diol can comprise less than or equal to 1 weight percent of the combined weight of each of the following hydroxy butyraldehyde, succinic aldehyde, succinic semialdehyde, succinic acid, hydroxy butyrate, butene diol, butylene diol, tetrahydrofuran, ethylene glycol, and propylene glycol, based on the total weight of the alkane diol.

A mole ratio of the alkane diol to the dicarboxylic acid can be 1.2:1 to 3.5:1, or 1.3:1 to 2.0:1, or 1.35:1 to 1.75:1.

The polyester oligomer can have a melt viscosity that is less than or equal to 50%, or 0.01 to 30%, or 0.5 to 10% of the melt viscosity of the polyester. For example, a polyester oligomer having a melt viscosity 0.9% of that of a polyester having a melt viscosity of 4,000 Poise would have a melt viscosity of 36 Poise.

The catalyst can comprise at least one of a titanium alkoxide, a tin-containing compound, or a zirconium-containing compound. The titanium alkoxide can comprise at least one of tetraisopropyl titanate, tetraisobutyl titanate, tetra tert-butyl titanate, tetraphenyl titanate, tetraethylhexyl titanate, a bis(alkanediolato) titanate, or a reaction product thereof with a phosphorous compound (such as phosphoric acid, monoalkyl phosphate or monoaryl phosphate). The tin-containing compound can comprise at least one of tin diacetate, tin dioctoate, tin dilaurate, dibutyl tin dilaurate, or dibutyl tin acetate. The zirconium-containing compound can comprise at least one of tetra-n-propyl zirconate or tetra-n-butyl zirconate. The catalyst can comprise a tin alkoxide, such as tetraisopropyl titanate, tetraisobutyl titanate or tetra tert-butyl titanate. The catalyst can comprise tetraisopropyl titanate. The catalyst can be present in an amount of 40 to 250 ppm, or 50 to 200 ppm, or 70 to 150 ppm by weight based on the total weight of the dicarboxylic acid and the alkane diol.

An additive can further be added to the polyester, for example, before, during, and/or after addition of the polyester oligomer. The additive can be added in a molten state or can be added after an extruded polyester is re-melted. The additive can be filtered prior to being added into the polymerization unit.

The additive can comprise at least one of an impact modifier, a flow modifier, a filler (e.g., a particulate polytetrafluoroethylene (PTFE), glass, carbon, a mineral, or metal), a reinforcing agent (e.g., glass fibers), an antioxidant, a heat stabilizer, a light stabilizer, an ultraviolet (UV) agent (such as a UV light stabilizer and a UV absorbing additive), a plasticizer, a lubricant, a release agent (such as a mold release agent (such as glycerol monostearate, pentaerythritol stearate, glycerol tristearate, stearyl stearate, and the like)), an antistatic agent, an antifog agent, an antimicrobial agent, a colorant (e.g., a dye or pigment), a surface effect additive, a radiation stabilizer, a flame retardant, or an anti-drip agent (e.g., a PTFE-encapsulated styrene-acrylonitrile copolymer (TSAN)). For example, a combination of a heat stabilizer, mold release agent, and ultraviolet light stabilizer can be used. **In** general, the additives are used in the amounts generally known to be effective. For example, the total amount of the additive composition (other than any impact modifier, filler, or reinforcing agent) can be 0.001 to 10 weight percent (wt%), or 0.01 to 5 wt%, each based on the total weight of the polyester composition.

The method for reducing the molecular weight of a polyester can comprise mixing a composition comprising a polyester oligomer and a polyester in a molten state to form a modified polyester; wherein the mixing occurs at a temperature of 230 to 330 °C, preferably 230-300 °C, preferably 230-280 °C or more preferably 230-260 °C. The polyester oligomer can be present in an amount of 0.1 to 50 weight percent based on the total weight of the composition. The polyester can comprise a C₂₋₁₂ alkyl phthalate polyester having a weight average molecular weight, Mwᵢ, of 15,000 to 100,000 g/mol determined using gel permeation chromatography based on polystyrene standards. The polyester oligomer has a weight average molecular weight of 1,000 to 10,000 g/mol based on polystyrene standards. The modified polyester can have a weight average molecular weight, Mw_{f}, of at least 5% less than the weight average molecular weight of the polyester. The mixing can comprise extruding and the extruding can occur at a temperature of 230 to 330 °C, preferably 230-300 °C, preferably 230-280 °C or more preferably 230-260 °C in an extruder comprising at least one screw rotating at a speed of 50 to 500 revolutions per minute. The composition can have a residence time in the extruder of 0.5 to 5 minutes. The method can comprise melting a plurality of polyester pellets to form the polyester in the molten state and then adding the polyester oligomer. The method can further comprise reacting an alkane diol and terephthalic acid in a continuous polymerization reaction to form the polyester; and extruding the composition during the continuous polymerization reaction, but after a final polymerization. The reacting can comprise forming the polyester oligomer in a reaction vessel and separating the polyester oligomer to form a first portion and a second portion; further polymerizing the first portion of the polyester oligomer to form the polyester; and directing the second portion of the polyester oligomer via a melt line to the polyester that is optionally at a temperature of 230 to 260 °C. The mixing the polyester oligomer can comprise first transferring the polyester oligomer through a melt line to polyester. The temperature of the melt line can be 230 to 260 °C. The amount of the hydroxyl end groups of the modified polyester is 50 to 250 meq/kg as determined in accordance with ASTM D4274-21. The carboxylic acid end group concentration of the modified polyester is 20 to 100 meq/kg as determined in accordance with ASTM D7409-15. A ratio of the hydroxyl end groups to the carboxylic end groups of the modified polyester is 1.2 to 2.5. A weight ratio of the polyester oligomer to the polyester can be 0.001:1 to 0.5:1. A pressure during the adding of the polyester oligomer can be 1.01 to 1.1 bar. The method can further comprise pelletizing the modified polyester after extruding to form pellets; and wherein the pellets comprise cylinders with an average length of 2.0 to 6.0 mm, an average diameter of 0.5 to 4.0 mm, and wherein the pellets have at least one angular face and wherein the surfaces defining the angular face meet at an angle of 60 to 120 degrees.

The polyester oligomer can comprise less than or equal to 1 weight percent of the combined weight of each of the following hydroxy butyraldehyde, succinic aldehyde, succinic semialdehyde, succinic acid, hydroxy butyrate, butene diol, butylene diol, tetrahydrofuran, ethylene glycol, and propylene glycol, based on the total weight of the polyester oligomer. In some embodiment, the polyester oligomer are substantially free of cyclic oligomer, preferably free of cyclic oligomer. The polyester can comprise at least 50 ppm by weight of at least one of titanium, tin, antinomy, or a combination comprising at least two of the foregoing based on the total weight of the polyester. The polyester can comprise less than or equal to 1,000 ppm by weight of a phosphorous containing compound based on the total weight of the polyester. The polyester can comprise less than or equal to 1 ppm by weight of lead, mercury, cadmium, thallium, chromium, arsenic, or a combination comprising at least two of the foregoing based on the total weight of the polyester.

The following examples are provided to illustrate the present disclosure. The examples are merely illustrative and are not intended to limit devices made in accordance with the disclosure to the materials, conditions, or process parameters set forth therein.

### Examples

### Example 1

1 kilogram of PBT 309, having a melt viscosity of 4,009 Poise and an end group acid concentration of 34 meq/kg, was mixed with 26 grams of a poly(butylene terephthalate) oligomer having a melt viscosity of 30 poise and an end group acid concentration of 500 meq/kg. The mixture was fed into the OMEGA 30T twin screw devolatilization extruder at a rate of 2 kilograms per hour, in which the barrel temperature of 240 °C was maintained. The residence time was adjusted to 2 minutes. The melt viscosity of the polymer collected at the exit of the extruder was 1,820 poise and thus transition to a lower molecular weight resin grade, PBT 306 was achieved. The end group acid concentration was 50 meq/kg.

### Example 2

1 kilogram of PBT 309, having a melt viscosity of 4,009 Poise and an end group acid concentration of 34 meq/kg, was mixed with 26 grams of a poly(butylene terephthalate) oligomer having a melt viscosity of 30 poise and an end group acid concentration of 500 meq/kg. The mixture was fed into the OMEGA 30T twin screw devolatilization extruder at a rate of 2 kilograms per hour, in which the barrel temperature of 240 °C was maintained. The residence time was adjusted to 3 minutes. The melt viscosity of the polymer collected at the exit of the extruder was 1,710 poise and thus transition to a lower molecular weight resin grade, PBT 306 was achieved. The end group acid concentration was 58 meq/kg.

### Example 3

1 kilogram of PBT 309, having a melt viscosity of 4,009 Poise and an end group acid concentration of 34 meq/kg, was mixed with 26 grams of a poly(butylene terephthalate) oligomer having a melt viscosity of 30 poise and an end group acid concentration of 500 meq/kg. The mixture was fed into the OMEGA 30T twin screw devolatilization extruder at a rate of 2 kilograms per hour, in which the barrel temperature of 240 °C was maintained. The residence time was adjusted to 4 minutes. The melt viscosity of the polymer collected at the exit of the extruder was 1,825 poise and thus transition to a lower molecular weight resin grade, PBT 306 was achieved. The end group acid concentration was 38 meq/kg.

The CEG concentration can be determined in accordance with ASTM D7409-15. The CEG concentration can be determined by dissolution of poly(alkylene terephthalate) in a mixture of solvents at room temperature; suppressing ionic formation by adding a second substance for sharp equivalence point determination; and titrating the solution against potassium hydroxide using potentiometric or colorimetric method after addition of bromophenol blue indicator. The concentration of hydroxyl end groups can be determined in accordance with ASTM D4274-21.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

As used herein, "a," "an," "the," and "at least one" do not denote a limitation of quantity, and are intended to cover both the singular and plural, unless the context clearly indicates otherwise. For example, "an element" has the same meaning as "at least one element," unless the context clearly indicates otherwise. The term "combination" is inclusive of blends, mixtures, alloys, reaction products, and the like. Also, "at least one of" means that the list is inclusive of each element individually, as well as combinations of two or more elements of the list, and combinations of at least one element of the list with like elements not named.

The term "or" means "and/or" unless clearly indicated otherwise by context.. Reference throughout the specification to "an aspect", "another aspect", "some aspects", and so forth, means that a particular element (e.g., feature, structure, step, or characteristic) described in connection with the aspect is included in at least one aspect described herein, and may or may not be present in other aspects. In addition, it is to be understood that the described elements may be combined in any suitable manner in the various aspects.

Unless specified to the contrary herein, all test standards are the most recent standard in effect as of the filing date of this application, or, if priority is claimed, the filing date of the earliest priority application in which the test standard appears.

The endpoints of all ranges directed to the same component or property are inclusive of the endpoints, are independently combinable, and include all intermediate points and ranges. For example, ranges of "up to 25 wt%, or 5 to 20 wt%" is inclusive of the endpoints and all intermediate values of the ranges of "5 to 25 wt%," such as 10 to 23 wt%, etc.

Unless defined otherwise, technical and scientific terms used herein have the same meaning as is commonly understood by one of skill in the art to which this disclosure belongs.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

## Claims

1. A method for reducing the molecular weight of a polyester, comprising:
mixing a composition comprising a polyester oligomer and a polyester in a molten state to form a modified polyester; wherein the mixing occurs at a temperature of 230 to 330 °C;
wherein the polyester oligomer is present in an amount of 0.1 to 50 weight percent based on the total weight of the composition;
wherein the polyester comprises a C₂₋₁₂ alkyl phthalate polyester having a weight average molecular weight, Mwᵢ, of 15,000 to 100,000 g/mol determined using gel permeation chromatography based on polystyrene standards; and
wherein the modified polyester has a weight average molecular weight, Mw_{f}, of at least 5% less than the weight average molecular weight of the polyester;
wherein the polyester oligomer has a weight average molecular weight of 1,000 to 10,000 g/mol based on polystyrene standards;
and
wherein at least one of
an amount of the hydroxyl end groups of the modified polyester is 50 to 250 meq/kg as determined in accordance with ASTM D4274-21;
a carboxylic acid end group concentration of the modified polyester is 20 to 100 meq/kg as determined in accordance with ASTM D7409-15; or
a ratio of the hydroxyl end groups to the carboxylic end groups of the modified polyester is 1.2 to 2.5.

2. The method of Claim 1, wherein the mixing occurs at a temperature of 230-330 °C, preferably 230-300 °C, preferably 230-280 °C or more preferably 230-260 °C.

3. The method according to any of the preceding claims, wherein the mixing comprises extruding; and wherein the extruding occurs at a temperature of 230 to 330 °C in an extruder comprising at least one screw rotating at a speed of 50 to 500 revolutions per minute.

4. The method according to any of the preceding claims, further comprising melting a plurality of polyester pellets to form the polyester in the molten state and then adding the polyester oligomer.

5. The method according to any of the preceding claims, further comprising
reacting an alkane diol and terephthalic acid in a continuous polymerization reaction to form the polyester; and
extruding the composition during the continuous polymerization reaction, but after a final polymerization.

6. The method according to claim 5, wherein the reacting comprises forming the polyester oligomer in a reaction vessel and separating the polyester oligomer to form a first portion and a second portion; and wherein the method further comprises polymerizing the first portion of the polyester oligomer to form the polyester; and directing the second portion of the polyester oligomer via a melt line to the polyester that is optionally at a temperature of 230 to 260 °C.

7. The method according to any of claims 1 to 5, wherein the mixing the polyester oligomer comprises first transferring the polyester oligomer through a melt line to polyester.

8. The method according to claim 5, wherein a temperature of the melt line is 230 to 260 °C.

9. The method according to any of the preceding claims, further comprising pelletizing the modified polyester after extruding to form pellets; and wherein the pellets comprise cylinders with an average length of 2.0 to 6.0 mm, an average diameter of 0.5 to 4.0 mm, and wherein the pellets have at least one angular face and wherein the surfaces defining the angular face meet at an angle of 60 to 120 degrees.

10. The method according to any of the preceding claims, wherein a weight ratio of the polyester oligomer to the polyester is 0.001:1 to 0.5:1.

11. The method according to any of the preceding claims, wherein the polyester oligomer comprises less than or equal to 1 weight percent of the combined weight of each of the following hydroxy butyraldehyde, succinic aldehyde, succinic semialdehyde, succinic acid, hydroxy butyrate, butene diol, butylene diol, tetrahydrofuran, ethylene glycol, and propylene glycol, based on the total weight of the polyester oligomer.

12. The method according to any of the preceding claims, wherein the polyester comprises at least 50 ppm by weight of at least one of titanium, tin, antimony, or a combination comprising at least two of the foregoing based on the total weight of the polyester.

13. The method according to any of the preceding claims, wherein the polyester comprises less than or equal to 1,000 ppm by weight of a phosphorous containing compound based on the total weight of the polyester.

14. The method according to any of the preceding claims, wherein the polyester comprises less than or equal to 1 ppm by weight of lead, mercury, cadmium, thallium, chromium, arsenic, or a combination comprising at least two of the foregoing based on the total weight of the polyester.

## Patentansprüche

1. Verfahren zum Reduzieren des Molekulargewichts eines Polyesters, umfassend:
Mischen einer Zusammensetzung, die ein Polyester-Oligomer und einen Polyester in einem geschmolzenen Zustand umfasst, um einen modifizierten Polyester zu bilden; wobei das Mischen bei einer Temperatur von 230 bis 330 °C erfolgt;
wobei das Polyester-Oligomer in einer Menge von 0,1 bis 50 Gewichtsprozent, bezogen auf das Gesamtgewicht der Zusammensetzung, vorhanden ist;
wobei der Polyester einen C₂₋₁₂-Alkylphthalat-Polyester umfasst, der ein gewichtsmittleres Molekulargewicht, M_{wi}, von 15.000 bis 100.000 g/mol aufweist, bestimmt unter Verwendung von Gelpermeationschromatographie, bezogen auf Polystyrolstandards; und
wobei der modifizierte Polyester ein gewichtsmittleres Molekulargewicht, M_{wf}, von mindestens 5 % weniger als das gewichtsmittlere Molekulargewicht des Polyesters aufweist;
wobei das Polyester-Oligomer ein gewichtsmittleres Molekulargewicht von 1.000 bis 10.000 g/mol, bezogen auf Polystyrolstandards, aufweist; und
wobei mindestens eines von Folgendem gilt
eine Anzahl der Hydroxylendgruppen des modifizierten Polyesters beträgt 50 bis 250 mEq/kg, wie in Übereinstimmung mit ASTM D4274-21 bestimmt;
eine Konzentration von Carbonsäureendgruppen des modifizierten Polyesters beträgt 20 bis 100 mEq/kg wie in Übereinstimmung mit ASTM D7409-15 bestimmt; oder
ein Verhältnis der Hydroxylendgruppen zu den Carboxylendgruppen des modifizierten Polyesters beträgt 1,2 bis 2,5.

2. Verfahren nach Anspruch 1, wobei das Mischen bei einer Temperatur von 230-330 °C, bevorzugt 230-300 °C, bevorzugt 230-280 °C oder bevorzugter 230-260 °C erfolgt.

3. Verfahren nach einem der vorstehenden Ansprüche, wobei das Mischen Extrudieren umfasst; und wobei das Extrudieren bei einer Temperatur von 230 bis 330 °C in einem Extruder erfolgt, der mindestens eine mit einer Drehzahl von 50 bis 500 Umdrehungen pro Minute rotierende Schnecke umfasst.

4. Verfahren nach einem der vorstehenden Ansprüche, weiter umfassend Schmelzen einer Vielzahl von Polyesterpellets, um den Polyester im geschmolzenen Zustand zu bilden, und danach Hinzufügen des Polyester-Oligomers.

5. Verfahren nach einem der vorstehenden Ansprüche, weiter umfassend Umsetzen eines Alkandiols und von Terephthalsäure in einer kontinuierlichen Polymerisationsreaktion, um den Polyester zu bilden; und
Extrudieren der Zusammensetzung während der kontinuierlichen Polymerisationsreaktion, jedoch nach einer abschließenden Polymerisation.

6. Verfahren nach Anspruch 5, wobei das Umsetzen Bilden des Polyester-Oligomers in einem Reaktionsgefäß und Trennen des Polyester-Oligomers, um einen ersten Anteil und einen zweiten Anteil zu bilden, umfasst; und wobei das Verfahren weiter Polymerisieren des ersten Anteils des Polyester-Oligomers umfasst, um den Polyester zu bilden; und Leiten des zweiten Anteils des Polyester-Oligomers über eine Schmelzleitung zu dem Polyester, der sich wahlweise bei einer Temperatur von 230 bis 260 °C befindet.

7. Verfahren nach einem der Ansprüche 1 bis 5, wobei das Mischen des Polyester-Oligomers zuerst Überführen des Polyester-Oligomers durch eine Schmelzlinie zu dem Polyester umfasst.

8. Verfahren nach Anspruch 5, wobei die Temperatur der Schmelzlinie 230 bis 260 °C beträgt.

9. Verfahren nach einem der vorstehenden Ansprüche, weiter umfassend Pelletieren des modifizierten Polyesters nach dem Extrudieren, um Pellets zu bilden; und wobei die Pellets Zylinder mit einer durchschnittlichen Länge von 2,0 bis 6,0 mm, einem durchschnittlichen Durchmesser von 0,5 bis 4,0 mm umfassen und wobei die Pellets mindestens eine Winkelfläche aufweisen und wobei die Oberflächen, die die Winkelfläche definieren, in einem Winkel von 60 bis 120 Grad aufeinandertreffen.

10. Verfahren nach einem der vorstehenden Ansprüche, wobei ein Gewichtsverhältnis des Polyester-Oligomers zu dem Polyester 0,001:1 bis 0,5:1 beträgt.

11. Verfahren nach einem der vorstehenden Ansprüche, wobei das Polyester-Oligomer weniger als oder gleich 1 Gewichtsprozent des Gesamtgewichts jedes von folgendem Hydroxybutyraldehyd, Bernsteinsäurealdehyd, Bernsteinsäuresemialdehyd, Bernsteinsäure, Hydroxybutyrat, Butendiol, Butylendiol, Tetrahydrofuran, Ethylenglykol und Propylenglykol umfasst, bezogen auf das Gesamtgewicht des Polyester-Oligomers.

12. Verfahren nach einem der vorstehenden Ansprüche, wobei der Polyester mindestens 50 ppm nach Gewicht mindestens eines von Titan, Zinn, Antimon oder einer Kombination aus mindestens zwei der vorgenannten umfasst, bezogen auf das Gesamtgewicht des Polyesters.

13. Verfahren nach einem der vorstehenden Ansprüche, wobei der Polyester weniger als oder gleich 1.000 ppm nach Gewicht einer phosphorhaltigen Verbindung umfasst, bezogen auf das Gesamtgewicht des Polyesters.

14. Verfahren nach einem der vorstehenden Ansprüche, wobei der Polyester weniger als oder gleich 1 ppm nach Gewicht von Blei, Quecksilber, Cadmium, Thallium, Chrom, Arsen oder einer Kombination aus mindestens zwei der vorgenannten umfasst, bezogen auf das Gesamtgewicht des Polyesters.

## Revendications

1. Procédé de réduction du poids moléculaire d'un polyester, comprenant :
le mélange d'une composition comprenant un oligomère de polyester et un polyester à l'état fondu pour former un polyester modifié ; dans lequel le mélange se déroule à une température de 230 à 330 °C ;
dans lequel l'oligomère de polyester est présent en une quantité de 0,1 à 50 pour cent en poids par rapport au poids total de la composition ;
dans lequel le polyester comprend un polyester de phtalate d'alkyle en C₂₋₁₂ présentant une masse moléculaire moyenne en poids, Mwᵢ, de 15 000 à 100 000 g/mol déterminée par chromatographie d'exclusion stérique à l'aide d'étalons de polystyrène ; et
dans lequel le polyester modifié présente une masse moléculaire moyenne en poids, Mw_{f}, inférieure d'au moins 5 % à la masse moléculaire moyenne en poids du polyester ;
dans lequel l'oligomère de polyester présente une masse moléculaire moyenne en poids de 1000 à 10 000 g/mol à l'aide d'étalons de polystyrène ; et
dans lequel au moins une parmi
la quantité de groupes terminaux hydroxyle du polyester modifié est de 50 à 250 meq/kg tel que déterminé conformément à la norme ASTM D4274-21 ;
la concentration en groupes terminaux d'acide carboxylique du polyester modifié est de 20 à 100 meq/kg tel que déterminé conformément à la norme ASTM D7409-15 ; ou
un rapport des groupes terminaux hydroxyle aux groupes terminaux carboxyliques du polyester modifié est de 1,2 à 2,5.

2. Procédé selon la revendication 1, dans lequel le mélange se déroule à une température de 230-330 °C, de préférence de 230-300 °C, de préférence de 230-280 °C ou plus préférentiellement de 230-260 °C.

3. Procédé selon l'une quelconque des revendications précédentes, dans lequel le mélange comprend une extrusion ; et dans lequel l'extrusion se déroule à une température de 230 à 330 °C dans une extrudeuse comprenant au moins une vis tournant à une vitesse de 50 à 500 tours par minute.

4. Procédé selon l'une quelconque des revendications précédentes, comprenant en outre la fusion d'une pluralité de granulés de polyester pour former le polyester à l'état fondu, puis l'ajout de l'oligomère de polyester.

5. Procédé selon l'une quelconque des revendications précédentes, comprenant en outre le fait de faire réagir un alcanediol avec un acide téréphtalique dans une réaction de polymérisation continue pour former le polyester ; et
l'extrusion de la composition pendant la réaction de polymérisation continue, mais après une polymérisation finale.

6. Procédé selon la revendication 5, dans lequel la réaction comprend la formation de l'oligomère de polyester dans un récipient de réaction et la séparation de l'oligomère de polyester pour former une première partie et une seconde partie ; et dans lequel le procédé comprend en outre la polymérisation de la première partie de l'oligomère de polyester pour former le polyester ; et l'acheminement de la seconde partie de l'oligomère de polyester via une ligne de fusion vers le polyester qui est éventuellement à une température de 230 à 260 °C.

7. Procédé selon l'une quelconque des revendications 1 à 5, dans lequel le mélange de l'oligomère de polyester comprend d'abord le transfert de l'oligomère de polyester à travers une ligne de fusion vers le polyester.

8. Procédé selon la revendication 5, dans lequel une température de la ligne de fusion est de 230 à 260 °C.

9. Procédé selon l'une quelconque des revendications précédentes, comprenant en outre la granulation du polyester modifié après extrusion pour former des granulés ; et dans lequel les granulés comprennent des cylindres d'une longueur moyenne de 2,0 à 6,0 mm, d'un diamètre moyen de 0,5 à 4,0 mm, et dans lequel les granulés présentent au moins une face angulaire et dans lequel les surfaces définissant la face angulaire se rencontrent à un angle de 60 à 120 degrés.

10. Procédé selon l'une quelconque des revendications précédentes, dans lequel un rapport pondéral de l'oligomère de polyester au polyester est 0,001:1 à 0,5:1.

11. Procédé selon l'une quelconque des revendications précédentes, dans lequel l'oligomère de polyester comprend moins de 1 pour cent en poids du poids combiné de chacun des composés suivants : hydroxybutyraldéhyde, aldéhyde succinique, semialdéhyde succinique, acide succinique, hydroxybutyrate, butènediol, butylènediol, tétrahydrofurane, éthylène glycol et propylène glycol, par rapport au poids total de l'oligomère de polyester.

12. Procédé selon l'une quelconque des revendications précédentes, dans lequel le polyester comprend au moins 50 ppm en poids d'au moins un des éléments suivants : titane, étain, antimoine ou une combinaison comprenant au moins deux des éléments susmentionnés, par rapport au poids total du polyester.

13. Procédé selon l'une quelconque des revendications précédentes, dans lequel le polyester comprend une quantité inférieure ou égale à 1000 ppm en poids d'un composé contenant du phosphore par rapport au poids total du polyester.

14. Procédé selon l'une quelconque des revendications précédentes, dans lequel le polyester comprend une quantité inférieure ou égale à 1 ppm en poids de plomb, de mercure, de cadmium, de thallium, de chrome, d'arsenic ou d'une combinaison comprenant au moins deux des éléments susmentionnés, en fonction du poids total du polyester.
